# NEUE EUROPÄISCHE PATENTSCHRIFT

(11) **EP 1 526 364 B2**
(45) Veröffentlichungstag und Bekanntmachung des Hinweises auf die Entscheidung über den Einspruch: **30.09.2009**
(45) Hinweis auf die Patenterteilung: 11.10.2006
(21) Anmeldenummer: 03103894.6
(22) Anmeldetag: 21.10.2003
(51) Int. Cl.: G01G 21/28

(54) **Verfahren zum Betätigen einer Waage und Waage**
Method for operating a weighing device and weighing device
Procédé pour faire fonctionner une balance et balance

(43) Veröffentlichungstag der Anmeldung: 27.04.2005
(73) Patentinhaber: Mettler-Toledo AG, 8606 Greifensee (CH)
(72) Erfinder: Leisinger, Roger, 8044 Zürich (CH); Künzi, Hansruedi, 8606 Greifensee (CH)

(56) Entgegenhaltungen:
- EP-A- 0 216 035
- EP-B1- 1 286 141
- WO-A1-98//15964
- DE-A- 3 924 236
- DE-A1- 3 815 626
- DE-A1- 10 103 205
- DE-U- 20 017 177
- DE-U- 20 304 465
- DE-U1- 9 116 271
- US-A- 4 862 401
- US-A1- 2003 061 177
- US-B1- 6 246 018
- "Brief- und Paketwaage DPE 34 E", Bedienungsanleitung der Firma Bizerba aus dem Jahr 1995.
- 'Wägen und Dosieren in explosionsgefährdeten Bereichen.' WÄGEN + DOSIEREN 01 Mai 1990,
- Bizerba-Prospekt aus dem Jahr 1995 "Auswertegerät ITE-EX für elektromechanische Waagen zum Einsatz in Zone 1", Ausgabe 01.03.1998.
- "BAL-Anwendungsprogramm mit WLAN", Beschreibung der Firma Bizerba zur Waage ITU vom 13.01.1999.

## Beschreibung

Die Erfindung betrifft ein Verfahren zum Betätigen einer Waage und eine Waage mit einer der Abarbeitung eines Betriebs- und/oder Anwendungsprogramms dienenden und dazu mit einem Prozessor und einer Speichereinheit versehenen Steuereinheit und wenigstens einer Eingabevorrichtung, mittels derer der Steuereinheit Steuersignale zuführbar sind.

Die Betätigung und Steuerung einer modernen Waage, insbesondere einer Analysenwaage oder einer Präzisionswaage, erfolgt vorzugsweise ohne manuellen Zugriff auf Funktionselemente der Waage, mittels einer Eingabeeinheit, von der Steuersignale an die in der Waage vorgesehenen Module abgegeben werden. Beispielsweise erfolgt das Öffnen und Schliessen von Gehäuseteilen mittels Motoren, die mittels Signalen gesteuert werden, die von der mit Eingabevorrichtungen oder Bedienelementen versehenen Eingabeeinheit abgegeben werden. Jede Eingabevorrichtung oder jedes Bedienelement weist dabei einen Sensor auf, mit dem Einwirkungen erfasst und in elektrische Signale gewandelt werden.

Wie in der europäischen Patentschrift EP 0 216 035 B1 beschrieben, können zur Steuerung einer Waage verschiedene Sensoren eingesetzt werden, die gegebenenfalls auch in das Waagengehäuse integriert oder in einem davon getrennten Gehäuse angeordnet sind. Beispielsweise können die Module der Waage sowie der Wägeprozess durch Eingabe von Kommandoworten in ein Mikrofon, mittels eines Näherungsschalters, mittels druckempfindlicher Tasten und/oder mittels eines in einem Fusspedal angeordneten Schalters gesteuert werden. Möglich ist ferner die Verwendung eines so genannten Softkeys, dem eine ausgewählte Funktion fest zugeordnet wird.

Die US 6 246 018 B1 offenbart eine Waage mit einem motor-getriebenen Windschutz, welche mindestens einen Sensor aufweist, mit dem die Lage einzelner Scheiben des Windschutzes erfasst wird. Die Endposition einer geöffneten Scheibe kann somit erfasst und gespeichert werden. Über eine Lemfunktion wird eine gewünschte Öffnungskonstellation eingestellt. Anschliessend kann jederzeit durch Drücken einer bestimmten Taste der Windschutz in der eingestellten Konstellation geöffnet werden und wieder geschlossen werden. Dabei erfassen die Sensoren den Zustand "geöffnet" oder "geschlossen" und bei Betätigen der Tasten werden die Scheiben abhängig vom Zustand entsprechend geschlossen oder geöffnet.

Aus der Offenlegungsschrift DE 101 34 281 A1 ist zudem eine Waage mit einer Antenne bekannt, mit der Signale von einem Transponder empfangen werden, der mit dem zu wägenden Objekt verbunden ist. Vom Transponder abgerufene Daten können dabei zur Steuerung der Waage verwendet werden.

In U. Tietze, Ch. Schenk, Halbleiterschaltungstechnik, 11. Auflage, 1. Nachdruck, Springer Verlag, Berlin 1999, Kapitel 23, Seiten 1221-1223 sind Sensoren beschrieben, mit denen verschiedene Messgrössen, beispielsweise Kraft, Druck, Schall und Lichtintensität, erfasst und in elektrische Signale gewandelt werden können.

Bei der Bedienung der bekannten Waagen bleibt dem Anwender die Aufgabe, während des Wägeprozesses jeweils die richtigen Eingabevorrichtungen oder Bedienelemente bzw. Sensoren zu betätigen. Seitens der Waage sind daher die notwendige Anzahl von Eingabeeinheiten mit Eingabevorrichtungen oder Bedienelementen bzw. Sensoren vorzusehen. Seitens des Anwenders hingegen ist die Kenntnisnahme und korrekte Auswahl der meist umfangreichen Eingabemöglichkeiten erforderlich.

Insbesondere bei schnell ablaufenden Wägeprozessen treten bei der Betätigung der Waagen daher oft unerwünschte Zeitverluste in Erscheinung.

Der vorliegenden Erfindung liegt daher die Aufgabe zugrunde, ein Verfahren zur vorteilhafteren, insbesondere einfacheren, flexibleren und schnelleren Betätigung einer Waage und eine nach diesem Verfahren arbeitende Waage zu schaffen.

Diese Aufgabe wird mit einem Verfahren zum Betätigen einer Waage und einer Waage gelöst, welche die in den unabhängigen Ansprüchen 1 bzw. 8 angegebenen Merkmale aufweisen. Vorteilhafte Ausgestaltungen der Erfindung sind in weiteren Ansprüchen angegeben.

Das Verfahren dient der Betätigung und Steuerung einer Waage, die eine der Abarbeitung eines Betriebs- und/oder Anwendungsprogramms dienende Steuereinheit und wenigstens eine Eingabevorrichtung aufweist, mittels derer der Steuereinheit Steuersignale zuführbar sind, wobei die Steuereinheit die von der Eingabevorrichtung abgegebenen Steuersignale zur Steuerung eines von wenigstens zwei Funktionsmodulen, welches die Steuereinheit der Eingabevorrichtung in Abhängigkeit des Betriebsstandes des Betriebs- und/oder Anwendungsprogramms zuordnet, verwendet. Die mindestens eine Eingabevorrichtung ist von der Waage getrennt im Gehäuse einer frei beweglichen Eingabeeinheit angeordnet.

Die Zuordnung der Funktionsmodule zur Eingabevorrichtung wird dem Anwender einfach oder mehrfach optisch angezeigt, so dass der Wägevorgang bequem gesteuert werden kann. Hierfür verfügt die frei bewegliche Eingabeeinheit über Anzeigemittel, insbesondere über Leuchtdioden, welche das jeweils gerade zugeordnete Funktionsmodul anzeigen und/oder die frei bewegliche Eingabeeinheit weist eine kleine, an deren Gehäuse angepasste Flüssigkristallanzeige auf. Insbesondere verfügt die frei bewegliche Eingabeeinheit über eine mit der Eingabevorrichtung co-operierende akustische und/oder optische Rückmeldevorrichtung, welche beispielsweise als gut sichtbar platzierte Leuchtdiode dem Anwender signalisiert, wenn die Eingabevorrichtung betätigt wurde.

Dies schafft beim Anwender das Vertrauen, dass die Eingabevorrichtung ausgelöst wurde und erhöht somit die Sicherheit des Verfahrens.

Mit der wenigstens einen Eingabevorrichtung sind daher mehrere Funktionsmodule steuerbar; Hardware- und/oder Softwaremodule, die beispielsweise für das Öffnen und Schliessen der Türen des Wägeraums, das Nullen der Waage, das Tarieren oder das Ausdrucken der Messresultate verwendet werden. Dabei ist jeweils das aktuell im Wägeprozess benötigte Funktionsmodul dieser Eingabevorrichtung zugeordnet. Die Aufmerksamkeit des Anwenders kann sich daher vollständig oder in hohem Mass auf die Bedienung der Eingabevorrichtung beschränken. In vorzugsweisen Ausgestaltungen können von der Eingabevorrichtung jedoch auch Informationen aus dem Wägeprozess, beispielsweise dem Wägegut zugehörige Daten, erfasst werden.

In vorteilhafter Ausgestaltung weist die Waage eine weitere Eingabeeinheit mit Bedienelementen, beispielsweise eine Anzeige- und Bedieneinheit, auf. Dies ist insbesondere im Hinblick auf eine flexible Nutzung einer Waage sinnvoll, wenn mit ihr beispielsweise sowohl über gemäss der vorliegenden Erfindung arbeitende Eingabevorrichtungen, als auch in konventioneller Weise gearbeitet werden soll.

Sofern der unmittelbare Eingriff des Anwenders in einen Messprozess notwendig wird, er jedoch nicht die Möglichkeit hat, eine weitere Eingabeeinheit, beispielsweise eine Anzeige und Bedieneinheit der Waage, zu bedienen, kann er die frei bewegliche Eingabeeinheit an einer passenden Stelle, gegebenenfalls sogar innerhalb des Wägeraums positionieren, um den Wägeprozess bequem, beispielsweise mit einer Hand- oder Fingerbewegung zu steuern. Der Anwender kann daher mit seinen Händen in einer so genannten Glove-Box oder Flow-Box arbeiten und den Wägeprozess ohne Unterbrechung rasch und bequem steuern.

Der besondere Vorteil einer Bedienung der Waage mittels einer Eingabevorrichtung anhand des Ablaufs, zum Beispiel eines Anwendungsprogramms besteht in einer vereinfachten und daher wirtschaftlicheren Handhabung der Waage.

Möglich ist ferner, dass die frei bewegliche Eingabeeinheit gleichzeitig an eine Waage und eine weitere Vorrichtung anschliessbar ist. Beispielsweise sind eine Waage und eine damit verbundene Fördervorrichtung mit einer frei beweglichen Eingabeeinheit verbunden, welche auch zwei Eingabevorrichtungen aufweisen kann, von denen eine zur Steuerung der Waage und die andere zur Steuerung der Fördervorrichtung verwendet wird.

Grundsätzlich kann die frei bewegliche Eingabeeinheit daher ein sehr einfaches oder auch ein intelligentes Terminal sein. In der einfachsten Ausgestaltung umfasst die frei bewegliche Eingabeeinheit einen Schalter, der über ein Kabel an einen Eingang der Waage angeschlossen ist. In komplexeren Ausgestaltungen können prozessorgesteuerte und mit Netzwerkmodulen versehene, mehrkanalige Eingabeeinheiten realisiert werden, die mit einer Anzeigeeinheit versehen sind.

Die Bedienelemente sind beispielsweise Funktionstasten, die in einer weiteren Eingabeeinheit, einer in einem Gehäuse angeordneten Tastatur oder einer berührungsempfindlichen Flüssigkristallanzeige, integriert sind.

Mindestens eine Eingabevorrichtung ist im Gehäuse der Waage oder im Gehäuse dieser weiteren Eingabeeinheit oder von der Waage getrennt im Gehäuse der drahtlosen oder drahtgebundenen, frei beweglichen Eingabeeinheit angeordnet.

Die mittels der Eingabevorrichtung ausführbaren Waagenfunktionen sind vorzugsweise identisch zu den Waagenfunktionen, die mittels der Bedienelemente der weiteren Eingabeeinheit ausgelöst werden können. Durch entsprechende Wahl der Prozessschritte des Wägevorgangs ist es daher möglich, dass die Prozesssteuerung ausschliesslich mittels der mindestens einen Eingabevorrichtung durchgeführt wird.

Sofern die Eingabevorrichtungen mit den Bedienelementen in einem Gehäuse der weiteren Eingabeeinheit integriert werden, resultieren tiefere Herstellungskosten. Die Verwendung einer drahtlosen oder drahtgebundenen, frei beweglichen Eingabeeinheit, in der die Eingabevorrichtungen integriert sind, erlaubt hingegen die Fernbedienung der Waage, so dass störende Einwirkungen auf das Messverfahren, die durch Manipulationen an der Waage entstehen können, vermieden werden. Ferner kann der Anwender eine beliebige Position wählen, von der aus der Wägeprozess gesteuert wird. Beispielsweise kann der Anwender den Wägeprozess steuern, während er sich, von der Waage entfernt, an seinem Arbeitsplatz befindet. Eine solche drahtlose oder drahtgebundene Eingabeeinheit ist frei beweglich und in einfacher Weise transportierbar. Sie kann auch an verschiedenen Stellen angebracht werden mittels einer Halterung, z.B. an der Wand oder auf der Arbeitsunterlage. Somit dient eine drahtlose oder drahtgebundene, frei bewegliche Einheit einer verbesserten Ergonomie und erhöhten Flexibilität beim Einsatz der Waage

Nachdem eine beispielsweise mit einem Prozessor und einem Speichermodul versehene frei bewegliche Eingabeeinheit drahtgebunden oder drahtlos an die Waage oder eine gegebenenfalls vorhandene weitere Eingabeeinheit oder eine Schnittstellenbox angeschlossen wurde, werden von der Steuereinheit vorzugsweise in der frei beweglichen Eingabeeinheit abgelegte Daten betreffend die frei bewegliche Eingabeeinheit und/oder betreffend den Nutzer der frei beweglichen Eingabeeinheit ausgelesen, so dass das aus der Waage und den beiden Eingabeeinheiten bestehende System korrekt konfiguriert werden kann. Sofern auf der frei bewegliche Eingabeeinheit beispielsweise ein Mikrofon als Eingabevorrichtung vorgesehen ist, aktiviert die Steuereinheit ein der Sprachsteuerung dienendes Adaptermodul, mittels dessen Audiosignale in digitale Instruktionen gewandelt werden, die zur Steuerung des zugeordneten Funktionsmoduls verwendbar sind.

In einer weiteren vorzugsweisen Ausgestaltung weisen die Steuereinheit und die frei bewegliche Eingabeeinheit Netzwerkmodule, beispielsweise nach den Bluetooth-Normen arbeitende Netzwerkmodule auf, mit denen die von der frei beweglichen Eingabeeinheit zur Verfügung gestellten Dienste entdeckt und nach Verbindungsaufnahme genutzt werden können. Diese so genannten Saiutation- und Service Discovery-Verfahren, welche die automatische Anbindung einer Komponente an ein Netzwerk sowie die erforderliche Neukonfigurierung des Netzwerks erlauben, sind in der U.S. Offenlegungsschrift US 2002/0120750 A1, beschrieben.

Der Anwender kann daher eine bevorzugte, beispielsweise zur Kommunikation mit verschiedenen Laborgeräten geeignete frei bewegliche Eingabeeinheit verwenden, die automatisch an eine Waage anschliessbar ist.

Nachfolgend wird die Erfindung anhand von Zeichnungen näher erläutert. Dabei zeigen:
- Figur 1: eine mittels einer weiteren Eingabeeinheit in Form einer Anzeige- und Bedieneinheit 5 steuerbare Waage 1 mit einem in einem Gehäuse 2 vorgesehenen Wägeraum 3, der mittels Schiebetüren 4 automatisch öffnen- und schliessbar ist,
- Figur 2: eine mit mehreren Bedienelementen 10 und zwei Eingabevorrichtungen 20, 20' versehene weitere Eingabeeinheit in Form einer Anzeige- und Bedieneinheit 5 der Waage 1,
- Figur 3: die Waage 1 aus Figur 1 mit einer frei beweglichen Eingabeeinheit 50,
- Figur 4: die in der Waage 1 vorgesehene Steuereinheit 6, die die von der weiteren Eingabeeinheit 5 und drei frei beweglichen Eingabeeinheiten 50 abgegebene Steuersignale verarbeitet und Funktionsmodule 71, 72, ... entsprechend steuert, und
- Figur 5: ein Ad-hoc-Netzwerk bestehend aus mehreren Waagen 1, 1', weiteren Eingabeeinheiten 5 und frei beweglichen Eingabeeinheiten 50.

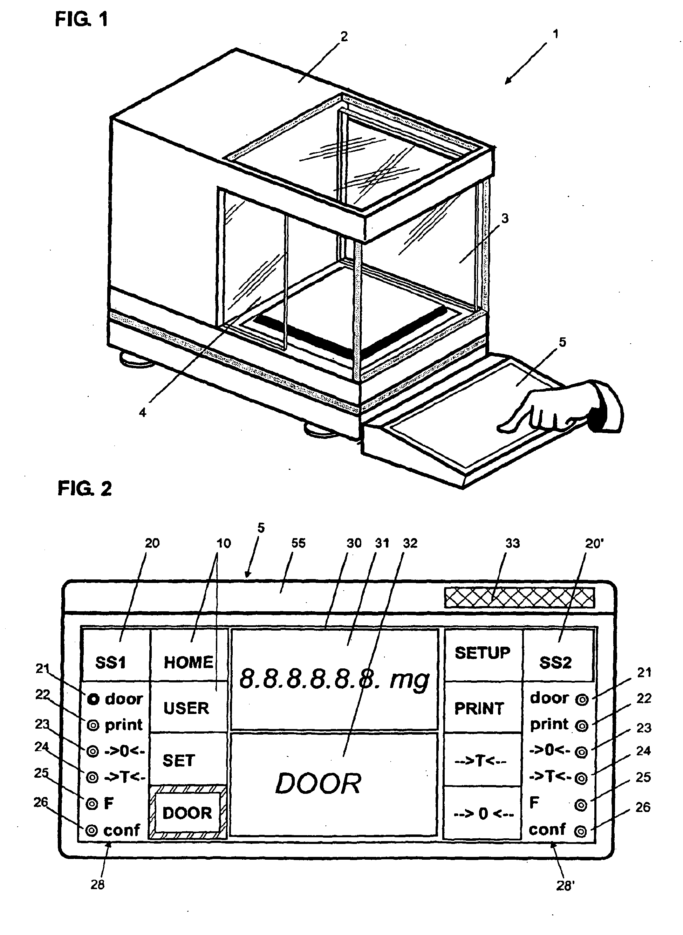

Figur 1 zeigt eine mittels einer weiteren Eingabeeinheit 5, beispielsweise einer Anzeige- und Bedieneinheit, steuerbare Waage 1 mit einem in einem Gehäuse 2 vorgesehenen Wägeraum 3, der mittels Schiebetüren 4 automatisch geöffnet und geschlossen werden kann.

Figur 2 zeigt in der Aufsicht die der Waage 1 zugehörige weitere Eingabeeinheit 5, die ein Gehäuse 55 aufweist, in dem mehrere Bedienelemente 10 und zwei Eingabevorrichtungen 20, 20' sowie ein Anzeigemodul, beispielsweise eine Flüssigkristallanzeige 30, mit zwei Sektoren 31, 32, Leuchtdioden 21, ..., 26 und ein Lautsprecher 33 angeordnet sind. Die Leuchtdioden 21, ..., 26 sind vorzugsweise unterhalb einer entsprechenden Eingabevorrichtung 20, 20' jeweils untereinander in einem Streifen 28, 28' am äusseren Rand der weiteren Eingabeeinheit in Form einer Anzeige- und Bedieneinheit 5 platziert. Die Breite des Streifens 28, 28' kann abweichend von der Darstellung auch geringer ausfallen und sich auf die Breite darzustellender Symbole beschränken, wobei die jeweiligen Leuchtdioden 21, ..., 26 unterhalb derselben, die Symbole durchleuchtend, angeordnet sein können.

Mittels der Bedienelemente 10, die beispielsweise in Form von mechanischen, elektronischen oder opto-elektronischen Schaltern realisiert sein können, lässt sich die Waage 1 in bekannter Weise betätigen und steuern.

Mittels der Tasten <→0←> und <→T←> sind die Funktionen "Nullen" und "Tarieren" durchführbar. Mittels der Tasten <DOOR> und <PRINT> sind der Türantrieb steuerbar und Messresultate zu einem Drucker übertragbar. Weiterhin sind die Waage 1 und die mit ihr durchführbaren Messverfahren mittels der Tasten <SETUP> und <SET> konfigurierbar bzw. parametrierbar. Zusätzlich sind Anwenderdaten mittels der Taste <USER> in der Waage 1 speicherbar.

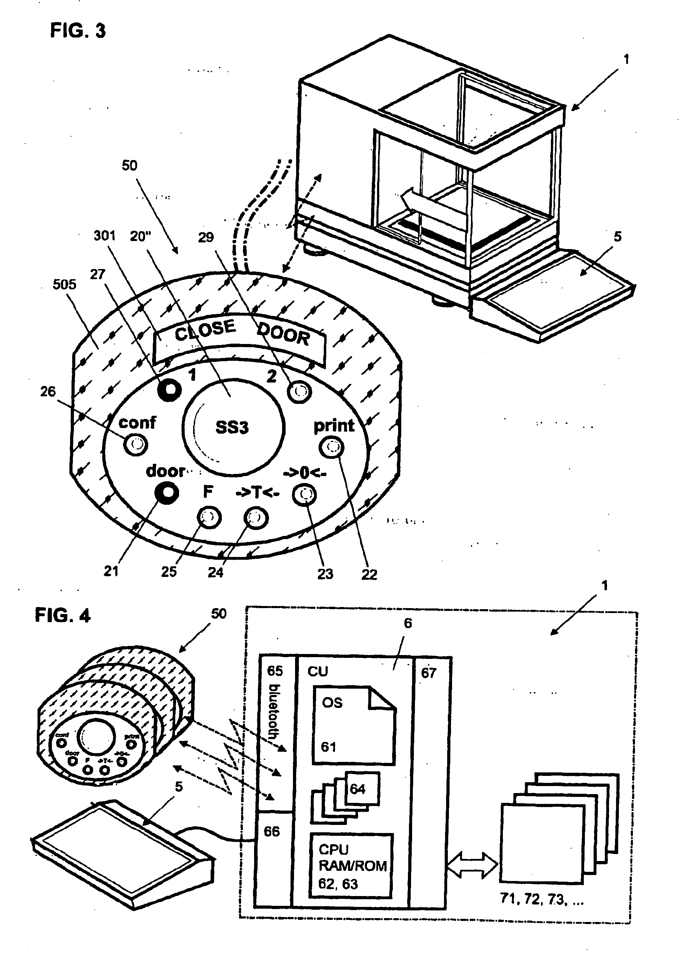

Die Waagenfunktionen "Nullen", "Tarieren", "Türantrieb" und "Drucken" sind jedoch auch mit jeder der beiden Eingabevorrichtungen 20, 20', welche beispielsweise als mechanische, elektronische oder opto-elektronische Schalter ausgebildet sind, realisierbar. In bevorzugter Ausgestaltung sind die Eingabevorrichtungen 20, 20' als Infrarot- oder Ultraschall-Näherungsschalter ausgebildet. Die in der Waage 1 vorgesehene Steuereinheit 6 (siehe Figur 4) ordnet anhand des Betriebs- und/oder Anwendungsprogramms 61 der Waage 1 vorzugsweise jeder der beiden Eingabevorrichtungen 20, 20' eine Waagenfunktion bzw. ein entsprechendes Funktionsmodul 71, 72, ... zu, mittels dessen die entsprechende Waagenfunktion ausgeführt wird. Unter einem Betriebsprogramm sei ein Programm zu verstehen, das den Betrieb und die Steuerung der Funktionsmodule der Waage 1 und damit letztlich auch den Standardbetrieb der Waage 1 gewährleistet und unter einem Anwendungsprogramm ein Programm oder eine Programmgruppe, mit dem ein bestimmter vorgegebener oder konfigurierbarer Wägeprozess unter Einsatz der Funktionsmodule ausgeführt werden kann.

Die den Eingabevorrichtungen 20, 20' zuordenbaren Waagenfunktion "Nullen", "Tarieren","Türantrieb", "Drucken" und eine frei wählbare Waagenfunktion "F" sind unterhalb der Eingabevorrichtungen 20, 20' auf dem entsprechenden Streifen 28, 28' markiert, gegebenenfalls symbolisiert, und mittels zugeordneter Leuchtdioden 21, ..., 25 signalisierbar. Eine solche Platzierung im Randbereich der weiteren Eingabeeinheit in Form einer Anzeige- und Bedieneinheit 5 ist besonders vorteilhaft, da die Signalisierung hier gut erkennbar ist und als optisches Signal auch in lauter Umgebung gut wahrnehmbar ist.

Die erfolgte Zuordnung oder der erfolgte Wechsel der Zuordnung einer Waagenfunktion kann mittels einer weiteren Leuchtdiode 26 und/oder akustisch, mittels des Lautsprechers 33, signalisiert werden. Insbesondere aber signalisiert die Leuchtdiode "conf" 26 das Quittieren einer ein Funktionsmodul 71, 72, ... auslösenden Betätigung einer Eingabevorrichtung 20, 20'. Denkbar ist in diesem Zusammenhang auch, dass die Rückmeldung auf eine Zuordnungsänderung verschieden von der des Quittierens einer ein Funktionsmodul 71, 72, ... auslösenden Betätigung der Eingabevorrichtung 20, 20' ausfällt, zum Beispiel einmal durch einfaches, beziehungsweise mehrfaches Blinken oder durch verschiedene Blinkfrequenzen.

Das Anwendungsprogramm 61 der Waage 1 legt dabei die dem Prozessablauf entsprechende Zuordnung der Waagenfunktionen fest.

Ein durchzuführendes Messverfahren betrifft beispielsweise das in der EP 0 216 035 B1, Spalte 1 beschriebene Dosieren eines ausgewählten Wägeguts. Dazu ist beispielsweise die Tür 4 zum Wägeraum 3 mehrfach zu öffnen und zu schliessen. Die Funktion "Türantrieb" wird daher bevorzugt der linken Eingabevorrichtung 20 zugeordnet.

Die rechte Eingabevorrichtung 20' kann durch entsprechende Zuordnung als Bestätigungstaste verwendet werden, indem durch das Betriebs- und/oder Anwendungsprogramm 61 für die frei wählbare Waagenfunktion"F" die <RETURN> oder <OK> Funktion festgelegt wird.

Der Anwender kann daher für den Dosiervorgang mit der linken Eingabevorrichtung 20 den Türantrieb so oft wie notwendig betätigen, und anschliessend durch Auslösen der rechten Eingabevorrichtung 20' den Abschluss des Dosiervorgangs signalisieren, so dass die Steuereinheit 6 anschliessend die Zuordnung der Waagenfunktionen zu den Eingabevorrichtungen 20, 20' neu festlegen kann. Beispielsweise wird dann der rechten Eingabevorrichtung 20' vom Anwendungsprogramm die Funktion "Drucken" zugeordnet, so dass die Messresultate gedruckt werden können, ohne dass der Anwender die Hand von der rechten Eingabevorrichtung 20' verschieben muss.

Während der gesamten Dauer der Zuordnung eines Funktionsmoduls 71, 72, ..., im oben beschriebenen Fall des Türantriebs, leuchtet also im linken seitlichen Streifen 28 die Leuchtdiode 21. Im rechten seitlichen Streifen 28' leuchtet die Leuchtdiode 25 der frei wählbaren Waagenfunktion"F", für welche die <RETURN> oder <OK> Funktion festgelegt wurde. Nach dem Wechsel der Zuordnung der rechten Eingabevorrichtung 20', indem dieser neu die Funktion "Drucken" zugeordnet wird, erlischt die Leuchtdiode 25 und die Leuchtdiode 22 wird aktiviert. Die Leuchtdioden 26 quittieren jeweils die erfolgte Betätigung der entsprechenden Eingabevorrichtung 20, 20', beispielsweise indem sie kurzzeitig blinken. Auf diese Weise erhält der Anwender die Sicherheit des planmässigen Abarbeitens des Programmablaufs.

Wie in Figur 2 gezeigt, kann eine zugeordnete Waagenfunktion einfach oder mehrfach angezeigt werden. Die der im oben angeführten Beispiel linken Eingabevorrichtung 20 zugeordnete Funktion "Türantrieb" wird mittels der Leuchtdiode 21 angezeigt. Sie kann aber auch zusätzlich oder alternativ mittels Beleuchtung des entsprechenden des Bedienelements 10 und/oder mittels des unteren Sektors 32 der Anzeigeeinheit 30 angezeigt werden.

Figur 3 zeigt die Waage 1 mit einer frei beweglichen Eingabeeinheit 50, in deren Gehäuse 505 eine Eingabevorrichtung 20" sowie zugehörige Anzeigemittel, eine Flüssigkristallanzeige 301 und wie bei der weiteren Eingabeeinheit 5 von Figur 2 sechs Leuchtdioden 21, ..., 26 angeordnet sind, mit denen dem Anwender eine zugeordnete Waagenfunktion und das Quittieren des Auslösens der Eingabevorrichtung, möglicherweise auch die Änderungen der Zuordnung einer Waagenfunktion anzeigbar bzw. signalisierbar sind. Diese Eingabeeinheit 50 ist frei beweglich. Sie kann daher genau an dem Ort platziert werden, wo sie gerade benötigt wird. Gegebenenfalls kann sie an einem entsprechenden Ort in einer Halterung fixiert werden. Durch diese hohe Flexibilität trägt sie dem Gesichtspunkt der Ergonomie in besonderer Weise Rechnung.

Diese mobile frei bewegliche Eingabeeinheit 50, die mittels einer elektrischen Leitung oder drahtlos, beispielsweise über Funk mit der Waage 1 verbunden werden kann, kann entfernt von der Waage 1, zum Beispiel am Schreibpult des Anwenders bedient werden. In der gezeigten Ausgestaltung dient die Flüssigkristallanzeige 301 daher zur Anzeige von notwendigen Instruktionen oder von Messresultaten, so dass der Wägeprozess praktisch ausschliesslich mittels der frei beweglichen Eingabeeinheit 50 steuerbar ist. Eine weitere Eingabeeinheit in Form einer Anzeige- und Bedieneinheit 5 ist in diesem Fall also nicht zwingend erforderlich. Sofern die Waage 1 mit einem Automaten oder Roboter versehen ist, kann der Anwender daher ganze Messreihen durchführen, ohne sich in der Nähe der Waage 1 aufhalten zu müssen.

Eine Eingabevorrichtung 20, 20', 20" unabhängig davon, ob sie in einer weitere Eingabeeinheit in Form einer Anzeige- und Bedieneinheit 5 oder in einer frei beweglichen Eingabeeinheit 50 angeordnet ist, bildet insbesondere zusammen mit den Leuchtdioden 21, ..., 25 für die Waagenfunktionen und der Leuchtdiode 26 für das Quittieren eine operative Einheit.

Die in Figur 3 gezeigte frei bewegliche Eingabeeinheit 50 kann ferner zur gleichzeitigen Steuerung einer ersten und einer zweiten Waage 1, 1' verwendet werden. Die Abfragen oder Zuordnungen von Funktionsmodulen 71, 72, ... durch die jeweilige Steuereinheit 6, 6' von den beiden Waagen 1, 1' werden sequentiell abgearbeitet. Mittels der zusätzlichen Leuchtdioden 27, 29 wird dem Anwender angezeigt, welche der beiden Waagen 1, 1' gerade betätigt werden soll.

Figur 4 zeigt Module 61, ..., 67 der in der Waage 1 vorgesehenen Steuereinheit 6 und die von der Steuereinheit 6 gesteuerten Funktionsmodule 71, 72, 73, ..., die als Hardwaremodule über ein Schnittstellenmodul 67 angesteuert oder als Softwaremodule innerhalb der Steuereinheit 6 implementiert sein können.

Eine weitere Eingabeeinheit in Form einer Anzeige- und Bedieneinheit 5 ist hier mit der Steuereinheit 6 drahtgebunden über ein weiteres Schnittstellenmodul 66 verbunden. Über ein solches Schnittstellenmodul 66 können auch eine oder mehrere frei bewegliche Eingabeeinheiten 50 drahtgebunden angeschlossen werden.

Für den drahtlosen Anschluss einer oder mehrerer frei beweglicher Eingabeeinheiten 50 kann eine Kommunikation über Funk oder Infrarot in Betracht gezogen werden. Vorzugsweise wird jedoch ein nach den Bluetooth-Normen arbeitendes Netzwerkmodul 65 vorgesehen, welches erlaubt, intelligente Netzwerkeinheiten, die sich in Funkreichweite aufhalten, zu einem Netzwerk zusammen zuschalten.

Das Bluetooth-Verfahren erlaubt, wie in der U.S. Offenlegungsschrift US 2002/0120750 A1 beschrieben, die Dienste der in Reichweite stehenden Netzwerkeinheiten anhand von Salutation- und Service Discovery Prozeduren zu ermitteln und das Netzwerk entsprechend zu konfigurieren. Demgemäss erkennt die Steuereinheit 6 beispielsweise einen mit einer entsprechenden Netzwerkkarte 65 versehenen Drucker und nutzt dessen Druckerdienste, nach Durchführung der notwendigen Konfigurationsprozeduren, zum Ausdrucken von Messresultaten. Ebenso erkennt die Steuereinheit 6 die Informationsdienste bzw. Eingabefunktionen der frei beweglichen Eingabeeinheit 50 und sendet, nach Durchführung der notwendigen Konfigurationsprozeduren für zugeordnete Waagenfunktionen, Abfragen an die frei beweglichen Eingabeeinheit 50 bzw. nimmt entsprechende Signale entgegen. Die Eingabevorrichtungen 20, 20', 20" erfüllen daher die Funktion von Sensoren, welche der Steuereinheit 6 die für die Durchführung des Wägeprozesses notwendigen Informationen liefern. Wie bereits erwähnt können diese Informationen vom Anwender zugeführt oder von Prozesseinheiten, gegebenenfalls vom Wägegut abgetastet oder abgelesen werden, beispielsweise mittels eines Codelesers, der ebenfalls als eine mögliche Eingabevorrichtung 20, 20', 20" in Frage kommt.

Zur Bearbeitung der von den Eingabevorrichtungen 20, 20', 20" übermittelten Signale sind für jeden Sensortyp, beispielsweise ein Näherungssensor oder ein Mikrofon zur Spracheingabe etc., die passenden Adaptermodule 64 vorgesehen. Gegebenenfalls sind analoge Sprachsignale des Anwenders in digitale Steuerinformationen zu wandeln oder digitale Signale zu decodieren oder es ist eine Schalterposition periodisch abzufragen.

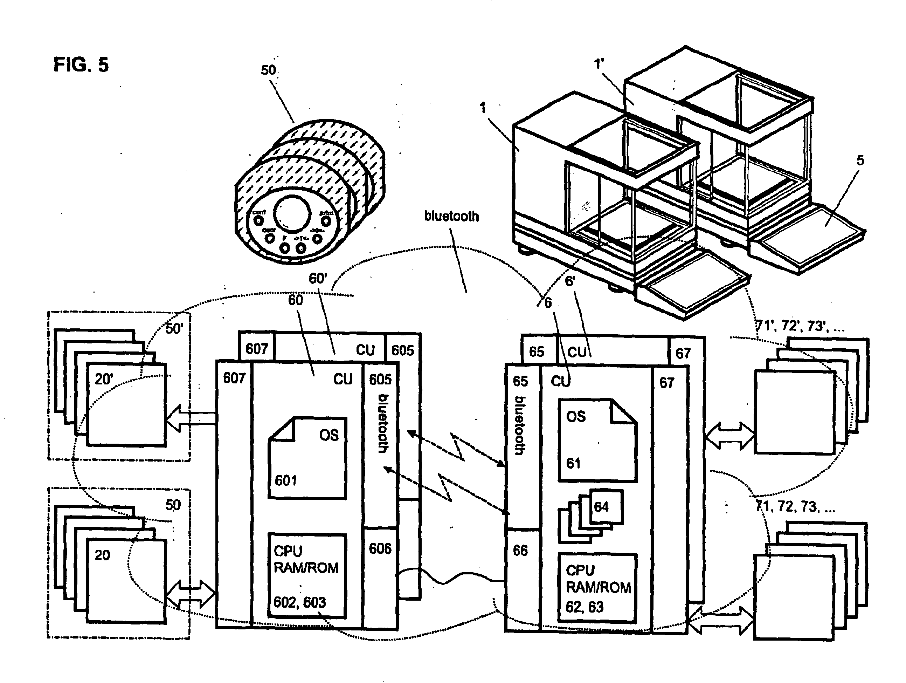

Figur 5 zeigt ein Ad-hoc-Netzwerk bestehend aus mehreren Waagen 1, 1', weiteren Eingabeeinheiten 5 und frei beweglichen Eingabeeinheiten 50. Ad-hoc Netzwerke oder mobile Ad-hoc Netzwerke (MANETs) sind lokale Netzwerke (LANs) deren Verbindungen typischerweise nur temporär, beispielsweise für eine Session, bei den vorliegenden Anwendungen beispielsweise für die Durchführung nur einer Messreihe, erstellt werden.

Die Waagen 1, 1' können beispielsweise für die Durchführung bestimmter Messreihen nur mit der weiteren Eingabeeinheit in Form einer Anzeige- und Bedieneinheit 5 betätigt werden. Sofern es der Anwender für erforderlich erachtet, kann er eine frei bewegliche Eingabeeinheit 50, durch Zuschaltung der Betriebsspannung, aktivieren. Gemäss dem Bluetooth-Verfahren werden von der frei bewegliche Eingabeeinheit 50 nun so genannte INQUIRY-Meldungen empfangen, mittels derer die Steuereinheit 6 der Waage 1 feststellt, ob weitere Bluetooth-Einheiten in Reichweite sind. Von der frei bewegliche Eingabeeinheit 50 werden daher deren Adressdaten retoumiert, anhand derer die Steuereinheit 6 prüft, ob eine Verbindung aufgenommen werden soll. Die Steuereinheit 6 kann daher systemfremde Einheiten ausschliessen und nur zu erwünschten Netzwerkeinheiten Kontakt aufnehmen. Dazu kann bereits in die INQUIRY-Meldungen ein entsprechender Code eingefügt werden durch den unerwünschte Einheiten ausgeschlossen werden. Der Anwender kann daher durch Festlegen einer Adressliste bestimmen, welche Netzwerkeinheiten in das Ad-hoc Netzwerk eingebunden werden. Mittels PAGE-Meldungen kann die Steuereinheit 6 anschliessend Kontakt zur betreffenden Netzwerkeinheit aufnehmen und, sofern dies nicht bereits anhand der Adressdaten ersichtlich ist, die von der Netzwerkeinheit zur Verfügung gestellten Dienste abfragen. Anschliessend kann die Steuereinheit 6 das erweiterte Waagen-System neu konfigurieren, so dass die Dienste der Netzwerkeinheit genutzt werden können (siehe US 2002/0120750 A1, Spalten 1 und 2).

Die Steuereinheit 6 wird daher am einfachsten anhand der Adressdaten der frei beweglichen Eingabeeinheit 50 feststellen, welche Sensoren darin verwendet werden, um anschliessend die benötigten Adaptermodule 64 zu implementieren. Möglich ist natürlich auch, eine frei bewegliche Eingabeeinheit 50 für zwei Waagen 1, 1' zu verwenden, welche mit ihren Abfragen jeweils ihre Adresse mit senden, so dass dem Anwender auf der frei beweglichen Eingabeeinheit 50 angezeigt werden kann, welche Waage 1 oder 1' er momentan bedient. In Figur 5 ist gezeigt, dass die frei bewegliche Eingabeeinheit 50 zur Erfüllung dieser Aufgaben einen Prozessor 602, eine Speichereinheit 603, ein eigenes Betriebsprogramm 601, ein Netzwerkmodul 605 sowie Schnittstellenmodule 606, 607 aufweist, mit denen drahtgebundene Verbindungen zu der mindestens einen Eingabevorrichtung 20, 20', 20" und zur Waage 1 erstellt werden können.

Die erfindungsgemässe Waage 1 wurde in einer bevorzugten Ausgestaltung beschrieben und dargestellt. Anhand der erfindungsgemässen Lehre sind jedoch weitere fachmännische Ausgestaltungen realisierbar. Insbesondere sind verschiedene Technologien zur Verbindung der frei beweglichen Eingabeeinheit 50 mit der Waage 1 anwendbar. Ferner können auf der weiteren Eingabeeinheit 5, beispielsweise einer Anzeige- und Bedieneinheit, oder der frei beweglichen Eingabeeinheit 50, und/oder auf dem Gehäuse 2 der Waage 1 eine oder mehrere Eingabevorrichtungen 20, 20', 20" vorgesehen werden, die zur Eingabe von Informationen mit Sensoren versehen sind die nach verschiedenen Prinzipien arbeiten (siehe U. Tietze, Ch. Schenk, Halbleiterschaltungstechnik, 11. Auflage, 1. Nachdruck, Springer Verlag, Berlin 1999, Kapitel 23, Seiten 1221-1223).

Bei der Realisierung komplexerer Systeme lassen sich die Betriebs- und Applikationsverfahren individuell an die Anwender anpassen.

### Bezugszeichenliste

- 1, 1': Waagen
- 10: Bedienelement
- 2: Waagengehäuse
- 20, 20', 20": Eingabevorrichtungen
- 21, ..., 25: Leuchtdioden für die Waagenfunktionen
- 26: Leuchtdioden für das Quittieren einer Zuordnung
- 27, 29: Leuchtdioden für Waagenauswahl
- 28, 28': Streifen
- 3: Wägeraum
- 30: Flüssigkristallanzeige der weiteren Eingabeeinheit in Form einer Anzeige- und Bedieneinheit 5
- 301: Flüssigkristallanzeige der frei beweglichen Eingabeeinheit 50
- 31: erster Sektor der Flüssigkristallanzeige 30
- 32: zweiter Sektor der Flüssigkristallanzeige 30
- 33: Lautsprecher
- 4: Türen zum Abschliessen des Wägeraums 3
- 5: weitere Eingabeeinheit in Form einer Anzeige- und Bedieneinheit
- 50: frei bewegliche Eingabeeinheit
- 55: Gehäuse der weiteren Eingabeeinheit in Form einer Anzeige- und Bedieneinheit 5
- 505: Gehäuse der frei beweglichen Eingabeeinheit 50
- 6: Steuereinheit der Waage 1
- 601: Betriebsprogramm der frei beweglichen Eingabeeinheit 50
- 602: Prozessor der frei beweglichen Eingabeeinheit 50
- 603: Speichermodul der frei beweglichen Eingabeeinheit 50
- 605: Netzwerkmodul der frei beweglichen Eingabeeinheit 50
- 606, 607: Schnittstellenmodule der frei beweglichen Eingabeeinheit 50
- 61: Betriebs und/oder Anwendungsprogramm der Steuereinheit 6
- 62: Prozessor der Steuereinheit 6
- 63: Speichermodul der Steuereinheit 6
- 64: Adaptermodule der Steuereinheit 6
- 65: Netzwerkmodul der Steuereinheit 6
- 66, 67: Schnittstellenmodule der Steuereinheit 6
- 71, 72, ...: Funktionsmodule

## Patentansprüche

1. Verfahren zur Betätigung einer Waage (1) mit einer der Abarbeitung eines Betriebs- und/oder Anwendungsprogramms (61) dienenden und dazu mit einem Prozessor (62) und einer Speichereinheit (63) versehenen Steuereinheit (6) und wenigstens einer Eingabevorrichtung (20, 20', 20"), mit der der Steuereinheit (6) Steuersignale zuführbar sind, wobei die Steuereinheit (6) die von der Eingabevorrichtung (20") abgegebenen Steuersignale zur Steuerung eines von wenigstens zwei Funktionsmodulen (71, 72, ...) verwendet, welches die Steuereinheit (6) der Eingabevorrichtung (20") in Abhängigkeit des Betriebsstandes des Betriebs- und/oder Anwendungsprogramms (61) zuordnet, wobei das von der Steuereinheit (6) der Eingabevorrichtung (20") zugeordnete Funktionsmodul (71, 72, ...) dem Anwender einfach oder mehrfach optisch mittels Anzeigemitteln, insbesondere mittels einer Flüssigkristallanzeige (301) und/oder mittels den Funktionsmodulen (71, 72, ...) zugeordneter Leuchtdioden (21, ..., 25) angezeigt wird, und das Betätigen einer Eingabevorrichtung (20") dem Anwender einfach oder mehrfach mittels einer Rückmeldevorrichtung, insbesondere akustisch mittels eines Schallwandlers und/oder optisch mittels einer Flüssigkristallanzeige (301) und/oder mittels einer weiteren Leuchtdiode (26) angezeigt wird, und wobei die Eingabevorrichtung (20"), die Anzeigemittel und die Rückmeldevorrichtung von der Waage (1) getrennt im Gehäuse (505) einer drahtlosen oder drahtgebundenen, frei beweglichen Eingabeeinheit (50) angeordnet sind, **dadurch gekennzeichnet, dass** mittels der frei beweglichen Eingabeeinheit (50) wenigstens eine weitere Vorrichtung, gegebenenfalls eine weitere Waage (1') oder eine Fördervorrichtung, steuerbar ist, und dass die Verbindung der frei beweglichen Eingabeeinheit (50) mit der Waage (1,1') oder der weiteren Vorrichtung dem Anwender optisch mittels zusätzlicher Leuchtdioden (27, 29) angezeigt wird, die im Gehäuse (505) der frei beweglichen Eingabeeinheit (50) angeordnet sind.

2. Verfahren nach Anspruch 1, **dadurch gekennzeichnet, dass** die erfolgte Durchführung einer neuen Zuordnung eines Funktionsmoduls (71, 72, ...) zu einer Eingabevorrichtung (20") dem Anwender einfach oder mehrfach mittels einer Rückmeldevorrichtung, insbesondere, akustisch mittels eines Schallwandlers und/oder optisch mittels einer Flüssigkristallanzeige (301) und/oder mittels einer weiteren Leuchtdiode (26) angezeigt wird, die im Gehäuse (505) der frei beweglichen Eingabeeinheit (50) angeordnet ist.

3. Verfahren nach einem der Ansprüche 1 oder 2, **dadurch gekennzeichnet, dass** die Steuereinheit (6), nach drahtgebundenem oder drahtlosem Anschluss einer mit einem Prozessor (602) und einem Speichermodul (603) versehenen frei beweglichen Eingabeeinheit (50) an die Waage (1), in der frei beweglichen Eingabeeinheit (50) abgelegte Daten betreffend die frei bewegliche Eingabeeinheit (50) und/oder betreffend den Nutzer der frei beweglichen Eingabeeinheit (50) ausliest und bei der Abarbeitung des Betriebs- und/oder Anwendungsprogramms (61) berücksichtigt.

4. Verfahren nach Anspruch 3, **dadurch gekennzeichnet, dass** die Steuereinheit (6) und die frei bewegliche Eingabeeinheit (50) mit Netzwerkmodulen, insbesondere nach den Bluetooth-Normen arbeitenden Netzwerkmodulen (65, 605), versehen sind, mittels derer die von der frei beweglichen Eingabeeinheit (50) zur Verfügung gestellten Dienste entdeckt und nach Verbindungsaufnahme genutzt werden.

5. Verfahren nach einem der Ansprüche 1 bis 4, **dadurch gekennzeichnet, dass** die Funktionsmodule (71, 72, ...) Hardware- und/oder Software- Einheiten sind, mit denen Waagenfunktionen, wie das Öffnen und Schliessen der Türen (4) des Wägeraums (3) der Waage (1), das Nullen der Waage (1), das Tarieren des Wägeguts oder das Drucken der Messergebnisse, ausgeführt werden.

6. Verfahren nach einem der Ansprüche 1 bis 5, **dadurch gekennzeichnet, dass** von der Steuereinheit mindestens ein frei wählbares Funktionsmodul einer Eingabevorrichtung (20") zugeordnet wird, und dass ein Anzeigeelement (25) vorhanden ist, welches gegebenenfalls die Zuordnung dieses Funktionsmoduls anzeigt.

7. Verfahren nach einem der Ansprüche 1 bis 6, **dadurch gekennzeichnet, dass** eine weitere Eingabeeinheit (5) mit Bedienelementen (10) vorhanden ist, und dass eine oder mehrere Eingabevorrichtungen (20, 20'), die Anzeigemittel und die Rückmeldevorrichtung im Gehäuse (2) der Waage (1) oder im Gehäuse (55) dieser weiteren Eingabeeinheit (5) angeordnet sind, wobei die eine oder mehrere Eingabevorrichtungen (20, 20') der weiteren Eingabeeinheit (5) in analoger Weise zu der wenigsten einen Eingabevorrichtung (20") der drahtlosen oder drahtgebundenen, frei beweglichen Eingabeeinheit (50) betätigt werden.

8. Waage (1) mit einer der Abarbeitung eines Betriebs- und/oder Anwendungsprogramms (61) dienenden und dazu mit einem Prozessor (62) und einer Speichereinheit (63) versehenen Steuereinheit (6) und wenigstens einer Eingebevorrichtung (20"), mittels derer der Steuereinheit (6) Steuersignale zuführbar sind, wobei die Steuereinheit (6) derart ausgestaltet ist, dass die von der Eingabevorrichtung (20") abgegebenen Steuersignale zur Steuerung eines von wenigstens zwei Funktionsmodulen (71, 72, ...) verwendbar sind, welches der Eingabevorrichtung (20") von der Steuereinheit (6) in Abhängigkeit des Betriebsstandes des Betriebs- und/oder Anwendungsprogramms (61) zuordenbar ist, wobei Anzeigemittel, insbesondere eine Flüssigkristallanzeige (301) und/oder den Funktionsmodulen (71, 72, ...) zugeordnete Leuchtdioden (21, ..., 25) vorhanden sind, mit denen das der Eingabevorrichtung (20") von der Steuereinheit (6) zugeordnete Funktionsmodul (71, 72, ...) dem Anwender einfach oder mehrfach, optisch anzeigbar ist, und mindestens eine Rückmeldevorrichtung, insbesondere eine weitere Leuchtdiode (26) und/oder eine Flüssigkristallanzeige (301) und/oder ein Schallwandler, insbesondere ein Lautsprecher (33) vorhanden ist, mittels derer ein erfolgtes Betätigen einer Eingabevorrichtung (20") und/oder der Abschluss einer neuen Zuordnung eines Funktionsmodule (71, 72, ...) an die Eingabevorrichtung (20") dem Anwender anzeigbar ist, und wobei die Elngabevorrichtung (20"), die Anzelgemittel und die Rückmeldevorrichtung von der Waage (1) getrennt, im Gehäuse (505) einer drahtlosen oder drahtgebundenen, frei beweglichen Eingabeeinheit (50) angeordnet sind, **dadurch gekennzeichnet, dass** die frei bewegliche Eingabeeinheit (50) zur Steuerung wenigstens einer weiteren Vorrichtung, gegebenenfalls einer weiteren Waage (1') oder einer Fördervorrichtung, geeignet ist und dass die Verbindung der frei beweglichen Eingabeeinheit (50) mit der Waage (1, 1') oder der weiteren Vorrichtung dem Anwender einfach oder mehrfach, optisch mittels zusätzlicher Leuchtdioden (27, 29) anzeigbar ist, die im Gehäuse (505) der frei beweglichen Eingabeeinheit (50) angeordnet sind.

9. Waage (1) nach Anspruch 8, **dadurch gekennzeichnet, dass** eine weitere Eingabeeinheit (5) mit Bedienelementen (10) vorhanden ist, und dass eine oder mehrere Eingabevorrichtungen (20, 20"), Anzeigemittel und/oder eine Rückmeldevorrichtung im Gehäuse (2) der Waage (1), oder im Gehäuse (55) der weiteren Eingabeeinheit (5) angeordnet sind, wobei die eine oder mehrere Eingabevorrichtungen (20, 20'), die Anzeigemittel und die Rückmeldevorrichtung denjenigen entsprechen, welche im Gehäuse (505) der drahtlosen oder drahtgebundenen, frei beweglichen Eingabeeinhelt (50) angeordnet sind.

10. Waage (1) nach einem der Ansprüche 8 oder 9, **dadurch gekennzeichnet, dass** die Steuereinheit (6) geeignet ist, nach drahtgebundenem oder drahtlosem Anschluss der mit einem Prozessor (602) und einem Speichermodul (603) versehenen frei beweglichen Eingabeeinheit (50) an die Waage (1), In der frei beweglichen Eingabeeinheit (50) abgelegte Daten, weiche die frei bewegliche Eingabeeinheit (50) oder deren Nutzer betreffen, auszulesen und bei der Abarbeitung des Betriebs- und/oder Anwendungsprogramms (61) zu berücksichtigen.

11. Waage (1) nach einem der Ansprüche 8 bis 10, **dadurch gekennzeichnet, dass** die Eingabevorrichtung (20, 20', 20") einen elektromechanischen Sensor, einen optischen Sensor, gegebenenfalls einen Infrarot-Näherungssensor oder Codeleser, einen elektroakustischen Sensor, insbesondere einen Ultraschall-Näherungssensor, oder einen elektromagnetischen Sensor aufweist.

12. Waage (1) nach einem der Ansprüche 10 oder 11, **dadurch gekennzeichnet, dass** die Steuereinheit (6) und die frei bewegliche Eingabeeinheit (50) mit Netzwerkmodulen, gegebenenfalls nach dem Bluetooth-Normen arbeitenden Netzwerkmodulen (65, 605) versehen sind, mit denen die von der frei beweglichen Eingabeeinheit (50) zur Verfügung gestellten Dienste entdeckbar und nach Verbindungsaufnahme nutzbar sind.

13. Waage (1) nach einem der Ansprüche 8 bis 12, **dadurch gekennzeichnet, dass** die Funktionsmodule (71, 72, ...) Hardware- und/oder Software- Einheiten sind, mit denen Waagenfunktionen, wie das Öffnen und Schliessen der Türen (4) des Wägeraums (3) der Waage (1), das Nullen der Waage, das Tarieren des Wägegute oder das Drucken der Messergebnisse, ausführbar sind.

14. Waage nach einem der Ansprüche 8 bis 13, **dadurch gekennzeichnet, dass** mindestens ein frei wählbares Funktionsmodul (71, 72, ...) einer Eingabevorrichtung (20, 20', 20") zuordenbar Ist, und dass ein Anzeigeelement (25) für die Anzeige einer erfolgten Zuordnung dieses Funktionsmoduls (71, 72, ...) vorhanden ist.

## Claims

1. Method of operating a balance (1) wherein the balance has a control unit (6) that serves to execute an operating- and/or applications program (61) and is equipped for this task with a processor (62) and a memory unit (63), and wherein the balance also has at least one entry device (20, 20', 20") through which command signals can be given to the control unit (6), wherein the control unit (6) uses the command signals received from the entry device (20") to control one of at least two function modules (71, 72, ...) that are assigned to the entry device (20") by the control unit (6) dependent on the operating status of the operating- and/or applications program (61), wherein the user, by means of one or more optical indicating means, in particular a liquid crystal display (301) and/or light-emitting diodes (21, ..., 25) assigned to the function modules (71, 72, ...), is informed as to which of the function modules (71, 72, ...) is assigned to the entry device (20") and the actuation of an entry device (20") is indicated to the user by one or more signals by means of a confirming feedback device, in particular an acoustical signal of a sound generator and/or an optical signal of a liquid crystal display (301) and/or of a further light-emitting diode (26), and wherein the entry device (20"), the indicating means and the confirming feedback device are arranged separate from the balance (1) in the housing (505) of a wireless or wire-connected freely movable input unit (50) , **characterized in that** at least one further device, which can be an additional balance (1') or a conveyor device, can be controlled by means of the freely movable input unit (50), and that the connection of the freely movable input unit (50) to the balance (1, 1') or to the additional device is indicated to the user by means of additional light-emitting diodes (27, 29) that are arranged in the housing (505) of the freely movable input unit (50).

2. Method according to claim 1, **characterized in that** the completion of a new assignment of a function module (71, 72, ...) to an entry device (20") is indicated to the user by one or more signals by means of a confirming feedback device, in particular an acoustical signal of a sound generator and/or an optical signal of a liquid crystal display (301) and/or of a further light-emitting diode (26), wherein the confirming feedback device is arranged in the housing (505) of the freely movable input unit (50).

3. Method according to one of the claims 1 or 2, **characterized in that**, subsequent to establishing a wire-borne or wireless connection between the balance (1) and a freely movable input unit (50) with a processor (602) and a memory module (603), the control unit (6) will read data stored in the freely movable input unit (50) and will take said data into account in the execution of the operating- and/or applications program (61), wherein said data relate to the freely movable input unit (50) and/or to the user of the freely movable input unit (50).

4. Method according to claim 3, **characterized in that** the control unit (6) and the freely movable input unit (50) are equipped with network modules (65, 605) operating in particular according to the Bluetooth standards, said modules serving to detect the availability of services from the freely movable input unit (50) and to use said services after communication has been established.

5. Method according to one of the claims 1 to 4, **characterized in that** the function modules (71, 72, ...) are hardware- and/or software units serving to perform balance functions such as the opening and closing of the doors (4) of the weighing compartment (3) of the balance (1), the zeroing of the balance (1), the tare-setting for the weighing object, or the printing of the measurement results.

6. Method according to one of the claims 1 to 5, **characterized in that** at least one freely selectable function module is assigned by the control unit to an entry device (20"), and that there is an indicating element (25) which indicates when the assignment is in effect.

7. Method according to one of the claims 1 to 6, **characterized in that** there is a further input unit (5) with operating elements (10), and that one or more entry devices (20, 20'), the indicating means and the confirming feedback device are arranged in the housing (2) of the balance (1) or in the housing (55) of said further input unit (5), wherein the at least one entry devices (20, 20') of the further input unit (5) are actuated in a manner analogous to the one or more entry devices (20") of the wireless or wire-connected freely movable input unit (50).

8. Balance (1) comprising a control unit (6) that serves to execute an operating- and/or applications program (61) and is equipped for this task with a processor (62) and a memory unit (63), and further comprising at least one entry device (20") through which command signals can be given to the control unit (6), wherein the control unit (6) is configured to use the command signals given by the entry device (20") to control one of at least two function modules (71, 72, ...) that are assigned to the entry device (20") by the control unit (6) dependent on the operating status of the operating and/or applications program (61), wherein indicating means are present, in particular a liquid crystal display (301) and/or light-emitting diodes (21, ..., 25) assigned to the function modules (71, 72, ...), by which the user is informed through one or more optical signals as to which of the function modules (71, 72, ...) is assigned to the entry device (20") and wherein at least one confirming feedback device, in particular a further light-emitting diode (26), and/or a liquid crystal display (301) and/or a sound generator, in particular a loudspeaker (33)is present, through which the actuation of an entry device (20") and/or the execution of a new assignment of a function module (71, 72, ...) to the entry device (20") can be indicated to the user, and wherein the entry device (20"), the indicating means and the confirming feedback device are arranged separate from the balance (1), in the housing (505) of a wireless or wire-connected freely movable input unit (50), **characterized in that** the freely movable input unit (50) is adapted for the control of at least one further device which can be a further balance (1') or a conveyor device, and that the connection of the freely movable input unit (50) to the balance (1, 1') or to the further device can be optically indicated to the user through one or more indications by means of additional light-emitting diodes (27, 29) that are arranged in the housing (2) of the balance (1) or in the housing (55) of the further input unit (5) and/or in the housing (505) of the freely movable input unit (50).

9. Balance (1) according to claim 8, **characterized by** the presence of a further input unit (5) with operating elements (10), and further **characterized in that** one or more entry devices (20, 20'), indicating means, and/or a confirming feedback device are arranged in the housing (2) of the balance (1) or in the housing (55) of the further input unit (5), wherein the one or more entry devices (20, 20'), the indicating means, and the confirming feedback device are analogous to those that are arranged in the housing (505) of the wireless or wire-connected freely movable input unit (50).

10. Balance (1) according to one of the claims 8 or 9, **characterized in that** the control unit (6), after establishing a wire-borne or wireless connection between the balance (1) and the freely movable input unit (50) that is equipped with a processor (602) and a memory module (603), is operable to read data that are stored in the freely movable input unit (50) and relate to the freely movable input unit (50) or to the user of the latter, and to take said data into account in the execution of the operating- and/or applications program (61).

11. Balance (1) according to one of the claims 8 to 10, **characterized in that** the entry device (20, 20', 20") comprises an electromechanical sensor, an optical sensor, in some cases an infrared proximity sensor, or a code reader, an electro-acoustical sensor, in particular an ultrasound proximity sensor, or an electromagnetic sensor.

12. Balance (1) according to one of the claims 10 or 11, **characterized in that** the control unit (6) and the freely movable input unit (50) are equipped with network modules which can be present in the form of network modules (65, 605) functioning according to the Bluetooth standards, which are operable to detect the availability of services from the freely movable input unit (50) and, subsequent to establishing communication, to utilize said services.

13. Balance (1) according to one of the claims 8 to 12, **characterized in that** the function modules (71, 72, ...) are hardware- and/or software units that are operable to perform weighing functions such as the opening and closing of the doors (4) of the weighing compartment (3) of the balance (1), the zero-setting of the balance, the tare-setting for the weighing object, or the printing of the measurement results.

14. Balance according to one of the claims 8 to 13, **characterized in that** at least one freely selectable function module (71, 72, ...) is assignable to an entry device (20, 20', 20"), and that an indicating element (25) is provided for indicating that the assignment of said function module (71, 72, ...) is in effect.

## Revendications

1. Procédé pour l'actionnement d'une balance (1) avec une unité de commande (6) servant au traitement d'un programme d'exploitation et/ou d'application (61) et doté à cet effet d'un processeur (62) et d'une unité de mémoire (63) et au moins un dispositif d'entrée (20, 20', 20 "), avec lequel des signaux de commande peuvent être amenés à l'unité de commande (6), l'unité de commande (6) utilisant les signaux de commande émis par le dispositif d'entrée (20") pour la commande d'un d' au moins deux modules de fonction (71, 72,...), qui attribue l'unité de commande (6) au dispositif d'entrée (20") en fonction de l'état de service du programme d'exploitation et/ou d'application (61), le module de fonction (71, 72,...) attribué par l'unité de commande (6) au dispositif d'entrée (20'') étant affiché visuellement de façon simple ou multiple pour l'utilisateur à l'aide de moyens d'affichage, en particulier au moyen d'un affichage à cristaux liquides (300) et/ou au moyen de diodes électroluminescentes (21,...25) attribuées aux modules de fonction (71, 72,... ) et l'actionnement d'un dispositif d'entrée (20") est affiché pour l'utilisateur de façon simple ou multiple au moyen d'un dispositif d'accusé de réception, en particulier sous une forme sonore au moyen d'un transducteur acoustique et/ou de façon visuelle au moyen d'un affichage à cristaux liquides (301) et/ou au moyen d'une autre diode électroluminescente (26), le dispositif d'entrée (20"), les moyens d'affichage et le dispositif d'accusé de réception étant disposés séparément de la balance (1) dans le boîtier (505) d'une unité d'entrée (50) sans fil ou à fil, librement mobile, **caractérisé en ce que** au moins un autre dispositif, éventuellement une autre balance (1') ou un dispositif de transport, peut être commandé au moyen de l'unité d'entrée (50) librement mobile et **en ce que** la liaison de l'unité d'entrée (50) librement mobile avec la balance (1,1') ou l'autre dispositif est affiché pour l'utilisateur de façon visuelle au moyen de diodes électroluminescentes (27, 29) supplémentaires, qui sont disposées dans le boîtier (505) de l'unité d'entrée (50).

2. Procédé selon la revendication 1, **caractérisé en ce que** la réalisation effectuée d'une nouvelle attribution d'un module de fonction (71, 72,...) à un dispositif d'entrée (20") est affichée pour l'utilisateur de façon simple ou multiple au moyen d'un dispositif d'accusé de réception, en particulier de façon sonore au moyen d'un transducteur acoustique et/ou de façon visuelle au moyen d'un affichage à cristaux liquides (301) et/ou au moyen d'une autre diode électroluminescente (26), qui est disposée dans le boîtier (505) de l'unité d'entrée (50) librement mobile.

3. Procédé selon l'une quelconque des revendications 1 ou 2, **caractérisé en ce que** l'unité de commande (6) lit, après le raccordement filaire ou sans fil d'une unité d'entrée (50) librement mobile et dotée d'un processeur (602) et d'un module de mémoire (603) à la balance (1), des données déposées dans l'unité d'entrée (50) librement mobile concernant l'unité d'entrée (50) librement mobile et/ou concernant l'utilisateur de l'unité d'entrée (50) librement mobile et les prend en compte lors du traitement du programme d'exploitation et/ou d'application (61).

4. Procédé selon la revendication 3, **caractérisé en ce que** l'unité de commande (6) et l'unité d'entrée (50) librement mobile sont dotées de modules de réseau, en particulier de modules de réseau (65, 605) travaillant selon les normes Bluetooth, au moyen desquels les services mis à disposition par l'unité d'entrée (50) librement mobile sont détectés et utilisés après l'établissement de la liaison.

5. Procédé selon l'une quelconque des revendications 1 à 4, **caractérisé en ce que** les modules de fonction (71, 72,...) sont des unités de matériel et/ou de logiciel, avec lesquelles des fonctions de balance, comme l'ouverture et la fermeture des portes (4) de l'espace de pesée (3) de la balance (1), la remise à zéro de la balance (1), le tarage du produit à peser ou l'impression des résultats de mesure, sont exécutés.

6. Procédé selon l'une quelconque des revendications 1 à 5, **caractérisé en ce que** l'unité de commande attribue au moins un module de fonction pouvant être choisi librement à un dispositif d'entrée (20'') et **en ce qu'**un élément d'affichage (25) est présent, lequel affiche éventuellement l'attribution de ce module de fonction.

7. Procédé selon l'une quelconque des revendications 1 à 6, **caractérisé en ce qu'**une autre unité d'entrée (5) avec des éléments de commande (10) est présent, et **en ce qu'**un ou plusieurs dispositifs d'entrée (20, 20'), les moyens d'affichage et le dispositif d'accusé de réception sont disposés dans le boîtier (2) de la balance ou dans le boîtier (55) de cette autre unité d'entrée (5), l'un ou plusieurs dispositifs d'entrée (20, 20') de l'autre unité d'entrée (5) étant actionnés de la même façon que le au moins un des dispositifs d'entrée (20") de l'unité d'entrée (50) sans fil, ou filaire, librement mobile.

8. Balance (1) avec une unité de commande (6) servant au traitement d'un programme d'exploitation et/ou d'application (61) et dotée à cet effet d'un processeur (62) et d'une unité de mémoire (63) et au moins un dispositif d'entrée (20"), au moyen duquel des signaux de commande peuvent être amenés à l'unité de commande (6), l'unité de commande (6) étant conçue de telle sorte que les signaux de commande émis par le dispositif d'entrée (20") peuvent être utilisés pour la commande d'un d'au moins deux modules de fonction (71, 72,...), lequel doit être attribué au dispositif d'entrée (20") par l'unité de commande (6) en fonction de l'état de service du programme d'exploitation et/ou d'application (61), des moyens d'affichage, en particulier un affichage à cristaux liquide (301) et/ou des diodes électroluminescentes (21,...25) attribuées aux modules de fonction (71, 72,...) étant présents, avec lesquels le module de fonction (71, 72,...) attribué au dispositif d'entrée (20") par l'unité de commande (6) peut être affiché sous une forme visuelle pour l'utilisateur de façon simple ou multiple et au moins un dispositif d'accusé de réception, en particulier une autre diode électroluminescente (26) et/ou un affichage à cristaux liquides (301) et/ou un transducteur acoustique, en particulier un haut-parleur (33) est présent, au moyen desquels un actionnement effectué d'un dispositif d'entrée (20") et/ou l'achèvement d'une nouvelle attribution d'un module de fonction (71, 72, ...) au dispositif d'entrée (20") peuvent être affichés pour l'utilisateur, le dispositif d'entrée (20"), les moyens d'affichage et le dispositif d'accusé de réception étant disposés séparément de la balance (1), dans le boîtier (505) d'une unité d'entrée (50) sans fil ou filaire, librement mobile, **caractérisée en ce que** l'unité d'entrée (50) librement mobile est appropriée pour la commande d'au moins un autre dispositif, éventuellement d'une autre balance (1') ou d'un dispositif de transport, et **en ce que** la liaison de l'unité d'entrée (50) librement mobile avec la balance (1, 1') ou l'autre dispositif peut être affichée pour l'utilisateur de façon simple ou multiple, sous une forme visuelle au moyen de diodes électroluminescentes (27, 29) supplémentaires, qui sont disposées dans le boîtier (2) de la balance (1) ou dans le boîtier (55) de l'autre unité d'entrée (5) et/ou dans le boîtier (505) de l'unité d'entrée (50) librement mobile.

9. Balance (1) selon la revendication 8, **caractérisée en ce qu'**une autre unité d'entrée (5) avec des éléments de commande (10) est présente, et **en ce qu'**un ou plusieurs dispositifs d'entrée (20, 20"), des moyens d'affichage et/ou un dispositif d'accusé de réception sont disposés dans le boîtier (2) de la balance (1), ou dans le boîtier (55) de l'autre unité d'entrée (5), un ou plusieurs dispositifs d'entrée (20, 20'), les moyens d'affichage et le dispositif d'accusé de réception correspondant à ceux qui sont disposés dans le boîtier (505) de l'unité d'entrée (50) sans fil ou filaire, librement mobile.

10. Balance (1) selon l'une quelconque des revendications 8 ou 9, **caractérisée en ce que** l'unité de commande (6) est appropriée pour lire, après le raccordement filaire ou sans fil de l'unité d'entrée (50) librement mobile, dotée d'un processeur (602) et d'un module de mémoire (603), à la balance (1), des données déposées dans l'unité d'entrée (50) librement mobile, qui concernent l'unité d'entrée (50) librement mobile ou ses utilisateurs et pour les prendre en compte lors du traitement du programme d'exploitation et/ou d'application (61).

11. Balance (1) selon l'une quelconque des revendications 8 à 10, **caractérisée en ce que** le dispositif d'entrée (20, 20', 20") présente un capteur électromécanique, un capteur optique, éventuellement un détecteur de proximité à infrarouge ou un lecteur de code, un capteur électroacoustique, en particulier un détecteur de proximité à ultrason ou un capteur électromagnétique.

12. Balance (1) selon l'une quelconque des revendications 10 ou 11, **caractérisée en ce que** l'unité de commande (6) et l'unité d'entrée (50) librement mobile sont dotées de modules de réseau, éventuellement de modules de réseau (65, 605) travaillant selon les normes Bluetooth, avec lesquels les services mis à disposition par l'unité d'entrée (50) librement mobile peuvent être détectés et être utilisés après l'établissement de la liaison.

13. Balance (1) selon l'une quelconque des revendications 8 à 12, **caractérisée en ce que** les modules de fonction (71, 72, ...) sont des unités de matériel et/ou de logiciel, avec lesquelles les fonctions de balance, comme l'ouverture et la fermeture des portes (4) de l'espace de pesée (3) de la balance (3), la remise à zéro de la balance, le tarage du produit à peser ou l'impression des résultats de mesure, peuvent être exécutées.

14. Balance selon l'une quelconque des revendications 8 à 13, **caractérisée en ce qu'**au moins un module de fonction (71, 72, ...) pouvant être choisi librement peut être attribué à un dispositif d'entrée (20, 20', 20") et **en ce qu'**un élément d'affichage (25) est présent pour l'affichage d'une attribution effectuée de ce module de fonction (71, 72, ...).
